# EUROPEAN PATENT APPLICATION

(11) **EP 4 683 277 A1**
(43) Date of publication of application: **21.01.2026**
(21) Application number: 24777407.8
(22) Date of filing: 05.01.2024
(51) Int. Cl.: H04L 27/26

(54) **DATA TRANSMISSION METHODS, ELECTRONIC DEVICE, AND COMPUTER-READABLE MEDIUM**

(30) Priority: 31.03.2023 CN 202310362186
(71) Applicant: ZTE CORPORATION, Shenzhen, Guangdong 518057 (CN)
(72) Inventor: XIN, Yu, Shenzhen, Guangdong 518057 (CN); HUA, Jian, Shenzhen, Guangdong 518057 (CN); BAO, Tong, Shenzhen, Guangdong 518057 (CN); YU, Guanghui, Shenzhen, Guangdong 518057 (CN)
(74) Representative: Canzler & Bergmeier Patentanwälte Partnerschaft mbB
(86) International application number: PCT/CN2024/070811
(87) International publication number: WO 2024/198611

(57) **Abstract**

Provided in the present disclosure are data transmission methods. A method comprises: performing grouping processing on data to be transmitted, so as to obtain N data groups (S110), N being a positive integer greater than 2; separately performing inverse Fourier transform on the data of each data group, so as to obtain N groups of first data sequences (S120); performing filtering operating on the first data sequences in edge groups among the N groups of first data sequences to obtain corresponding second data sequences (S130); performing inverse Fourier transform on the data corresponding to the second data sequences and the data corresponding to the first data sequences in non-edge groups to obtain a time domain data sequence (S140); and transmitting the time domain data sequence (S150). Further provided in the present disclosure are an electronic device and a computer-readable medium.

## Description

### TECHNICAL FIELD

The present disclosure relates to the technology field of communications, and in particular, to data transmission methods, an electronic device, and a computer-readable medium.

### BACKGROUND

The Long Term Evolution (LTE) technology is the Fourth Generation (4G) wireless cellular communication technology. The LTE technology adopts the Orthogonal Frequency Division Multiplexing (OFDM) technology, and time-frequency resources formed by subcarriers and OFDM symbols serve as wireless physical time-frequency resources for an LTE system. At present, the OFDM technology has been widely applied to wireless communication. By adopting Cyclic Prefixes (CPs), a CP-OFDM system can solve a multipath delay problem well, and divide a frequency selective channel into a group of parallel flat channels, which simplifies a channel estimation method well, and facilitates to achieve relatively high channel estimation accuracy.

The Fifth Generation New Radio (5G NR) communication technology still adopts CP-OFDM as a basic waveform, and different numerologies can be adopted for two adjacent subbands. In order to avoid damaging orthogonality between subcarriers and reduce interference, a guard band is to be inserted between two transmission bands with different numerologies.

Due to a relatively large span between frequency bands and various deployment modes, future sixth generation (6G) services expect not only multi-bandwidth channels, but also waveform schemes for different scenarios. However, each waveform scheme being carried out independently would increase cost of base stations/terminals. How to design a unified waveform architecture to flexibly integrate a plurality of waveforms together, how to flexibly support application of different channel bandwidths, and how to eliminate interference between multi sub-bands and improve spectral efficiency are all problems to be solved.

### SUMMARY

Embodiments of the present disclosure provide data transmission methods, an electronic device, and a computer-readable medium.

In a first aspect of the present disclosure, there is provided a data transmission method, including: grouping data to be transmitted into N data groups, with N being a positive integer greater than 2; respectively performing Inverse Fast Fourier Transform (IFFT) on the data of each data group to obtain N groups of first data sequences; performing a filtering operation on the first data sequence of an edge group in the N groups of first data sequences to obtain a second data sequence; performing IFFT on the second data sequence and the data corresponding to the first data sequences of non-edge groups in the N groups to obtain a time domain data sequence; and transmitting the time domain data sequence.

In a second aspect of the present disclosure, there is provided a data transmission method, including: dividing data to be transmitted into N initial groups, with the N initial groups including an edge initial group and a plurality of non-edge initial groups, data volumes of the plurality of non-edge initial groups are the same, and the data volume of each of the plurality of non-edge initial groups being greater than a data volume of the edge initial group; respectively performing IFFT on the data corresponding to the N initial groups to obtain N groups of data sequences; respectively performing IFFT on the N groups of data sequences to obtain time domain data sequences; and transmitting the time domain data sequences.

In a third aspect of the present disclosure, there is provided an electronic device, including: at least one processor; and a storage device having stored thereon at least one program which, when executed by the at least one processor, causes the at least one processor to implement the data transmission method described in the first or second aspect.

In a fourth aspect of the present disclosure, there is provided a computer-readable medium having stored thereon a computer program which, when executed by a processor, causes the processor to implement the data transmission method described in the first or second aspect.

In the data transmission method provided in the present disclosure, the data to be transmitted is grouped first into the N data groups. In view of the fact that a spectral bandwidth of the edge group is less than a spectral bandwidth of the non-edge group, in order to reduce out-of-band leakage, after performing IFFT on the N data groups to obtain the N groups of first data sequences, the first data sequence of the edge group can be separately subjected to the filtering operation. After the first data sequence of the edge group is separately subjected to the filtering operation to obtain the second data sequence, the second data sequence corresponding to the edge group and the first data sequences of the non-edge groups which are not subjected to the filtering operation can be together subjected to IFFT, which can ensure uniformity of parameters of a polyphase filter in a subsequent filtering operation. In a case where the parameters of the polyphase filter are uniform, fusion of various waveforms can be realized, and separately deploying each waveform is not necessary, resulting in a reduced cost of base stations and terminals.

### BRIEF DESCRIPTION OF DRAWINGS

FIG. 1 is a flowchart illustrating a data transmission method according to an implementation of the present disclosure;
FIG. 2 is a schematic diagram illustrating an implementation of operation S130;
FIG. 3 is a schematic diagram illustrating an implementation of operation S130;
FIG. 4 is a schematic diagram illustrating an implementation of S132b;
FIG. 5 is a schematic diagram illustrating an implementation of operation S110;
FIG. 6 is a schematic diagram illustrating an implementation of operation S140;
FIG. 7 is a schematic diagram illustrating an implementation of operation S143;
FIG. 8 is a schematic diagram illustrating an implementation of operation S143;
FIG. 9 is a flowchart illustrating a data transmission method according to an implementation of the present disclosure;
FIG. 10 is a schematic diagram illustrating an implementation of operation S220;
FIG. 11 is a block diagram of an electronic device according to an implementation of the present disclosure;
FIG. 12 is a schematic diagram of a computer-readable medium according to the present disclosure;
FIG. 13 is a schematic diagram illustrating a data transmission method according to Example 1;
FIG. 14 is a schematic diagram illustrating a data transmission method according to Example 2;
FIG. 15 is a schematic diagram illustrating a data transmission method according to Example 3;
FIG. 16 is a schematic diagram illustrating a data transmission method according to Example 4;
FIG. 17 is a schematic diagram illustrating a data transmission method according to Example 5;
FIG. 18 is a schematic diagram illustrating a data transmission method according to Example 6;
FIG. 19 is a schematic diagram illustrating a data transmission method according to Example 7;
FIG. 20 is a schematic diagram illustrating a data transmission method according to Example 8;
FIG. 21 is a schematic diagram illustrating a data transmission method according to Example 9; and
FIG. 22 is a schematic diagram illustrating a data transmission method according to Example 10.

### DETAIL DESCRIPTION OF EMBODIMENTS

In order to enable those of ordinary skill in the art to better understand the technical solutions of the present disclosure, a data transmission method, an electronic device, and a computer-readable storage medium provided in the present disclosure are described in detail below with reference to the drawings.

Exemplary embodiments will be described more fully below with reference to the drawings, but the exemplary embodiments described herein may be embodied in different forms and should not be interpreted as being limited to those described herein. Rather, the embodiments are provided to make the present disclosure thorough and complete, and enable those of ordinary skill in the art to fully understand the scope of the present disclosure.

The embodiments described herein and the features therein may be combined with one another if no conflict is incurred.

The term "and/or" used herein includes any and all combinations of one or more associated listed items.

The terms used herein are merely used to describe specific embodiments, and are not intended to limit the present disclosure. As used herein, "a" and "the" which indicate a singular form are intended to include a plural form, unless expressly stated in the context. It should be further understood that the term "include" and/or the term "be made of" used herein indicates the presence of the described features, integers, operations, elements and/or components, but does not exclude the presence or addition of one or more other features, integers, operations, elements, components and/or combinations thereof.

Unless otherwise defined, all terms (including technical terms and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

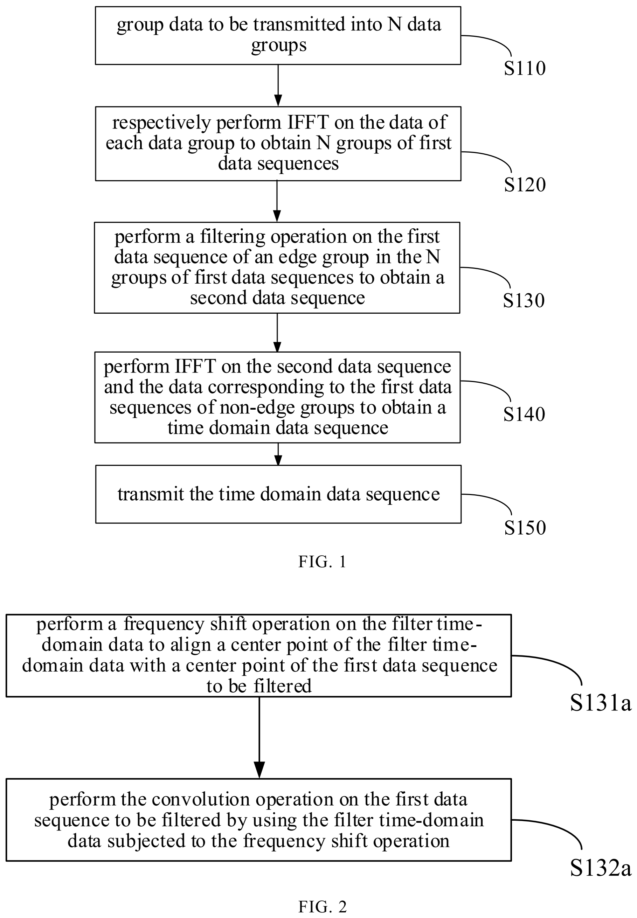

In a first aspect of the present disclosure, there is provided a data transmission method. As shown in FIG. 1, the data transmission method includes: operation S110, grouping data to be transmitted into N data groups, with N being a positive integer greater than 2; operation S120, respectively performing IFFT on the data of each data group to obtain N groups of first data sequences; operation S130, performing a filtering operation on the first data sequence of an edge group in the N groups of first data sequences to obtain a second data sequence; operation S140, performing IFFT on the second data sequence and the data corresponding to the first data sequences of non-edge groups in the N groups to obtain a time domain data sequence; and operation S150, transmitting the time domain data sequence.

In the data transmission method provided in the present disclosure, the data to be transmitted is grouped first into the N data groups. In view of the fact that a spectral bandwidth of the edge group is less than a spectral bandwidth of the non-edge group, after performing IFFT on the N data groups to obtain the N groups of first data sequences, the first data sequence of the edge group is separately subjected to the filtering operation, which reduces out-of-band leakage.

In addition, at operation S130, after being filtered separately, the first data sequence of the edge group and the first data sequences of the non-edge groups can be uniformly subjected to a polyphase filtering operation, so as to ensure uniformity of parameters of a polyphase filter. In a case where the parameters of the polyphase filter are uniform, fusion of various waveforms can be realized, and separately deploying each waveform is not necesary, resulting in a reduced cost of base stations and terminals.

Among the N groups of first data sequences, the first data sequences of the groups other than the edge group are the first data sequences of the non-edge groups. In the present disclosure, the "first data sequence of the edge group" is located at an edge of the N groups of first data sequences, but not each of the first data sequences at the edge is the "first data sequence of the edge group". In an alternative implementation, the first data sequence of a first group is the "first data sequence of the edge group", but the first data sequence of an N^{th} group is not the "first data sequence of the edge group". In another alternative implementation, the first data sequence of the first group is the "first data sequence of the edge group", and the first data sequence of the N^{th} group is also the "first data sequence of the edge group". In yet another alternative implementation, the first data sequence of the first group is not the "first data sequence of the edge group", but the first data sequence of the N^{th} group is the "first data sequence of the edge group".

In the present disclosure, the "data corresponding to the first data sequences of the non-edge groups" may be the first data sequences of the non-edge groups, or may be second data sequences obtained by filtering the first data sequences of the non-edge groups, or may be data sequences obtained by adding CPs to the first data sequences of the non-edge groups.

A basis for grouping the data to be transmitted at operation S110 is not particularly limited in the present disclosure. In an alternative implementation, the data to be transmitted may be grouped based on frequency domain resource blocks corresponding to the data to be transmitted, and the N data groups correspond to N different frequency domain resource blocks, respectively. Such implementation will be described in detail below, and will not be described here.

In an alternative implementation, the first data sequence of the edge group includes the first data sequences of first a groups in the N groups of first data sequences, with a being a positive integer satisfying 1 ≤ a<N / 2. That is, each of the first data sequences of the first a groups is the first data sequence of the edge group.

In another alternative implementation, the first data sequence of the edge group includes the first data sequences of last b groups in the N groups of first data sequences, with b being a positive integer satisfying 1 ≤ b<N/2. That is, each of the first data sequences of the last b groups is the first data sequence of the edge group.

In yet another alternative implementation, each of the first data sequences of the first a groups and the first data sequences of the last b groups is the first data sequence of the edge group.

Values of a and b are not particularly limited in the present disclosure. The values of a and b may be determined based on the amount of the data to be transmitted. In an alternative implementation, a=1 and b=1. That is, the first data sequence of the edge group includes the first data sequence of the first group and/or the first data sequence of the N^{th} group.

How to perform operation S130 is not particularly limited in the present disclosure. In an alternative implementation, at operation S130, a convolution operation may be performed on the first data sequence of the edge group by using filter time-domain data, to obtain the second data sequence.

In a specific implementation, as shown in FIG. 2, performing the filtering operation on the first data sequence of the edge group in the N groups of first data sequences to obtain the second data sequence includes: operation S131a, performing a frequency shift operation on the filter time-domain data to align a center point of the filter time-domain data with a center point of the first data sequence to be filtered; and operation S132a, performing the convolution operation on the first data sequence to be filtered by using the filter time-domain data subjected to the frequency shift operation.

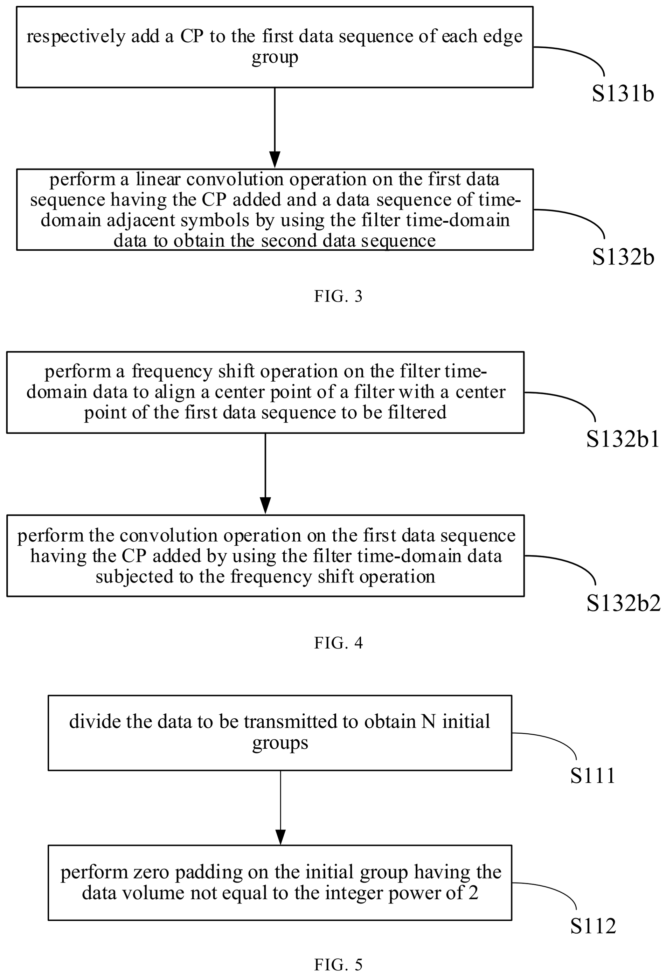

Certainly, the present disclosure is not limited to the above. In another alternative implementation, as shown in FIG. 3, performing the filtering operation on the first data sequence of the edge group in the N groups of first data sequences to obtain the second data sequence includes: operation S131b, respectively adding a CP to the first data sequence of each edge group; and operation S132b, performing a linear convolution operation on the first data sequence having the CP added and a data sequence of time-domain adjacent symbols by using the filter time-domain data to obtain the second data sequence.

In the present disclosure, a position of the second data sequence of each group is unchanged, that is, the second data sequence is still in the edge group.

In such implementation, the data corresponding to the first data sequences of the non-edge groups include data obtained by adding CPs to the first data sequences of the non-edge groups.

Accordingly, as shown in FIG. 4, performing the linear convolution operation on the first data sequence having the CP added and the data sequence of time-domain adjacent symbols by using the filter time-domain data to obtain the second data sequence includes: operation S132b1, performing a frequency shift operation on the filter time-domain data to align a center point of a filter with a center point of the first data sequence to be filtered; and operation S132b2, performing the convolution operation on the first data sequence having the CP added by using the filter time-domain data subjected to the frequency shift operation.

As described above, the spectral bandwidth of the edge group is less than the spectral bandwidth of the non-edge group. Accordingly, as shown in FIG. 5, grouping the data to be transmitted into the N data groups includes: operation S111, dividing the data to be transmitted to obtain N initial groups, with a data volume of each non-edge initial group being an integer power of 2 (i.e., 2ⁱ, i is a positive integer, and values of i are different for the different initial groups), and a data volume of an edge initial group being not equal to an integer power of 2; and operation S112, performing zero padding on the initial group having the data volume not equal to the integer power of 2, thereby obtaining the N data groups, with the data volume of each of the N data groups being an integer power of 2.

In the present disclosure, for the N initial groups, the data volume of the edge initial group may be less than the data volume of the non-edge initial group. In order to perform the filtering operation subsequently, the initial group having the data volume not equal to the integer power of 2 is to be subjected to zero padding, so as to form the edge initial group into a "data group". The data volume of each of the non-edge "initial groups" is the integer power of 2, and thus the non-edge "initial groups" are not to be subjected to zero padding, and can be directly used as the data groups for subsequent processing. Therefore, the N data groups can be obtained after operation S112, and the amount of the "data" in each data group is an integer power of 2. For the edge group in the data groups, the "data" in the edge group includes padded zero. It should be noted that zero padding is to be performed at an outer side of the initial group duiring operation S112 being performed.

With the data transmission method provided in the present disclosure, the data to be transmitted in any amount can be divided into N groups, and by zero padding, the amount of the data in each of the groups can be made the same, the data to be transmitted is stored consecutively, and the number of IFFT points for each group is the same. Thus, it can be ensured that each subsequent serial IFFT has a same number of points (sampling points).

In an alternative implementation, the data volumes of the non-edge initial groups are the same. Certainly, the present disclosure is not limited thereto, and the data volumes of the non-edge initial groups may be different. In some implementations, a ratio of the data volumes of the non-edge initial groups is an integer power of 2.

It should be noted that the edge initial group is not to be subjected to zero padding in a case where the data volume of the edge initial group is already the integer power of 2. Accordingly, the filter time-domain data is not to be subjected to the frequency shift operation. In other words, a frequency shift amount of the frequency shift operation is 0 in a case where the data volume of the edge initial group in the N initial groups is the integer power of 2.

In an alternative implementation, at the operation of respectively performing IFFT on the data of each data group, the number of IFFT points for each data group is less than a total number of pieces of the data to be transmitted.

Further, at the operation of respectively performing IFFT on the data of each data group, the number of IFFT points is an integer power of 2.

In some implementations, the IFFT at the operation of respectively performing IFFT on the data of each data group is 2-fold oversampling, and a data starting point for performing IFFT on the data of each data group is within the corresponding data group.

In an alternative implementation, at the operation of performing IFFT on the second data sequence and the data corresponding to the first data sequences of the non-edge groups, the IFFT is oversampling IFFT with a number of sampling points being greater than N.

In the present disclosure, other data may be transmitted together with the "data to be transmitted". Accordingly, at the operation of performing IFFT on the second data sequence and the data corresponding to the first data sequences of the non-edge groups to obtain the time domain data sequence, the data in the IFFT further includes data sequences of other groups. The "data sequences of other groups" corresponds to the "other data" transmitted together with the "data to be transmitted" as described above.

A form of the "data sequences of other groups" and how to obtain the "data sequences of other groups" are not particularly limited in the present disclosure. In an alternative implementation, before performing the filtering operation on the first data sequence of the edge group in the N groups of first data sequences to obtain the second data sequence, the data transmission method further includes: performing IFFT on other data groups to obtain first data sequences of other groups, with the other data groups not belonging to the N data groups.

Therefore, before performing IFFT on the second data sequence and the data corresponding to the first data sequences of the non-edge groups to obtain the time domain data sequence, the data transmission method further includes: performing a filtering operation on the first data sequences of other groups to obtain second data sequences of other groups. The "second data sequences of other group" are the "data sequences of other groups" as described above.

At the operation of performing IFFT on the second data sequence and the data corresponding to the first data sequences of the non-edge groups to obtain the time domain data sequence, the data in the IFFT further includes the second data sequences of other groups.

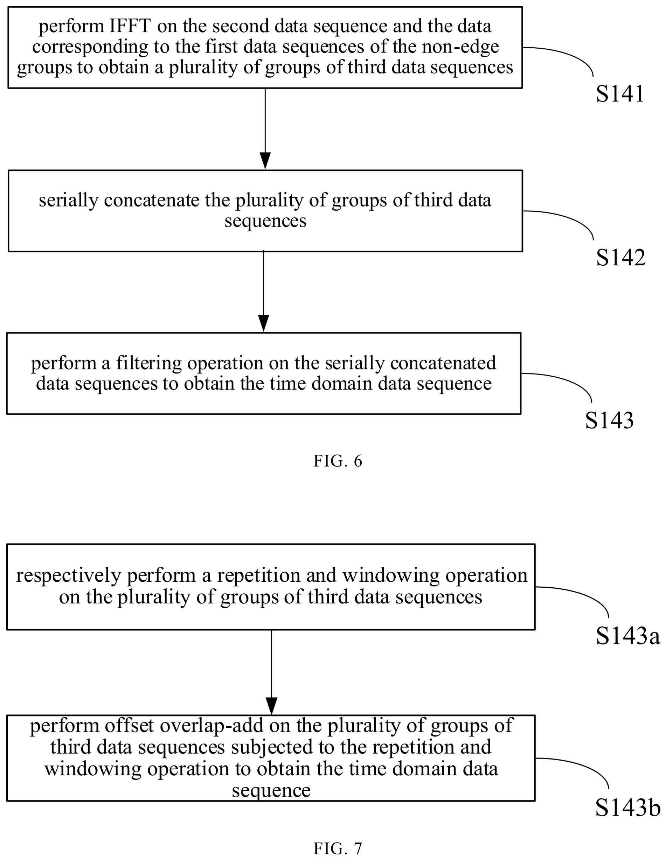

How to perform operation S 140 is not particularly limited in the present disclosure. In some implementations, as shown in FIG. 6, operation S140 may include: operation S141, performing IFFT on the second data sequence and the data corresponding to the first data sequences of the non-edge groups to obtain a plurality of groups of third data sequences;
operation S142, serially concatenating the plurality of groups of third data sequences; and operation S143, performing a filtering operation on the serially concatenated data sequences to obtain the time domain data sequence.

How to perform operation S141 is not particularly limited in the present disclosure. In some implementations, at the operation of performing IFFT on the second data sequence and the data corresponding to the first data sequences of the non-edge groups, the IFFT is oversampling IFFT with a number of sampling points being greater than N.

Accordingly, performing IFFT on the second data sequence and the data corresponding to the first data sequences of the non-edge groups to obtain the plurality of groups of third data sequences includes: respectively performing data extraction on the second data sequence of each group and the first data sequence of each non-edge group to obtain a plurality of groups of third initial sequences, with each group of third initial sequence including N pieces of data from the second data sequence of each group and the first data sequences of the non-edge groups; and respectively performing IFFT on the plurality of groups of third initial sequences to obtain the plurality of groups of third data sequences.

In an alternative implementation, based on the order of the N data groups, the corresponding N groups of data sequences including the second data sequence and the first data sequences may be arranged into N rows to form an N*M matrix, with M being the amount of the data included in each data sequence. For the matrix, data extraction is performed in units of columns, and the extracted data in each column (i.e., each third initial sequence) includes N pieces of data. The IFFT is performed once every time after N pieces of data (i.e., a third initial sequence) are extracted, and the third data sequence is obtained after performing IFFT on the third initial sequence.

How to perform operation S143 is not particularly limited in the present disclosure. In some implementations, at the operation of performing the filtering operation on the serially concatenated data sequences, the filtering operation includes a polyphase filtering operation.

Specifically, as shown in FIG. 7, performing the filtering operation on the serially concatenated data sequences to obtain the time domain data sequence includes: operation S143a, respectively performing a repetition and windowing operation on the plurality of groups of third data sequences; and operation S143b, performing offset overlap-add on the plurality of groups of third data sequences subjected to the repetition and windowing operation to obtain the time domain data sequence.

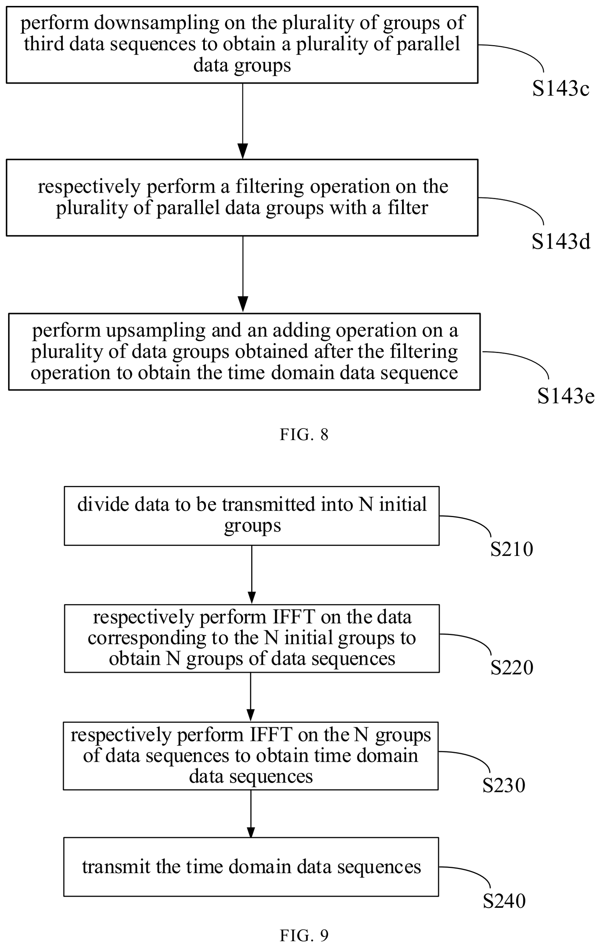

In another alternative implementation, as shown in FIG. 8, performing the filtering operation on the serially concatenated data sequences to obtain the time domain data sequence includes: operation S143c, performing downsampling on the plurality of groups of third data sequences to obtain a plurality of parallel data groups; operation S143d, respectively performing a filtering operation on the plurality of parallel data groups with a filter; and operation S143e, performing upsampling and an adding operation on a plurality of data groups obtained after the filtering operation to obtain the time domain data sequence.

As described above, the data to be transmitted may be grouped based on the frequency domain resource blocks. That is, the N data groups are transmitted in N frequency domain resource blocks, respectively. Correspondingly, the number of subcarriers included in each of the N frequency domain resource blocks is k(n), the N frequency domain resource blocks are consecutive in frequency domain, and k(n) of each non-edge frequency domain resource block is 2 to the power of i (i.e., an integer power of 2), with i being a positive integer and n=1, 2, ... N.

It should be noted that values of n for the different frequency domain resource blocks may be the same or different.

In an implementation of the present disclosure, operation S120 may be specifically performed by: respectively performing IFFT on the data to be transmitted on the k(n) subcarriers in each frequency domain resource block to form N groups of time domain data sequences (i.e., the N groups of first data sequences).

In an implementation of the present disclosure, operation S130 may be specifically performed by: performing the filtering operation on the first data sequence obtained after performing IFFT on an edge frequency domain resource block in the N frequency domain resource blocks to obtain the second data sequence.

In an implementation of the present disclosure, operation S140 may be specifically performed by: performing IFFT on the second data sequence corresponding to the edge frequency domain resource block in the N frequency domain resource blocks and the data corresponding to the first data sequences corresponding to the non-edge frequency domain resource blocks in the N frequency domain resource blocks to obtain N groups of third data sequences.

A spectrum of each frequency domain resource block is not particularly limited in the present disclosure. In some implementations, spectral spacings (frequency spacings) of adjacent non-edge frequency domain resource blocks are the same. In some implementations, spectral bandwidths of the non-edge frequency domain resource blocks are the same.

In an alternative implementation, the number of the subcarriers in each non-edge frequency domain resource block is the same.

In another alternative implementation, the numbers of the subcarriers in the non-edge frequency domain resource blocks may be not the same, and specifically, a ratio of the numbers of the subcarriers in the non-edge frequency domain resource blocks is an integer power of 2.

In an alternative implementation, subcarrier spacings of the N frequency domain resource blocks are the same.

In another alternative implementation, the subcarrier spacings of the N frequency domain resource blocks are not the same, and a ratio of the subcarrier spacings of different frequency domain resource blocks is an integer power of 2.

In an alternative implementation, the subcarriers in the edge frequency domain resource block include initial subcarriers and zero subcarriers, the number of the initial subcarriers is less than the number of subcarriers in each of other frequency domain resource blocks having the same subcarrier spacings as the edge frequency domain resource block, and the sum of the number of the initial subcarriers and the number of the zero subcarriers in the edge frequency domain resource block is the same as the number of the subcarriers in each of the other frequency domain resource blocks having the same subcarrier spacings as the edge frequency domain resource block.

In some implementations, the zero subcarriers in the edge frequency domain resource block are outside the N frequency domain resource blocks.

In some implementations, a spectral bandwidth of the edge frequency domain resource block with no zero subcarriers padded is less than spectral bandwidth of the non-edge frequency domain resource block.

In some implementations, at the operation of respectively performing IFFT on the data of each data group, the IFFT is respectively performed on the data to be transmitted on the k(n) subcarriers in each frequency domain resource block, and a zero-frequency position of the IFFT meets any one of the following conditions: zero-frequency positions of the IFFT corresponding to the frequency domain resource blocks are different in frequency domain; the zero-frequency position of the IFFT corresponding to each frequency domain resource block is within a frequency range of the k(n) subcarriers in the frequency domain resource block; and the zero-frequency position of the IFFT corresponding to each frequency domain resource block is on one of the k(n) subcarriers in the frequency domain resource block.

In some implementations, performing the filtering operation on the first data sequence of the edge group in the N groups of first data sequences to obtain the second data sequence includes: respectively adding a Guard Interval (GI) to the first data sequence of each edge group, with the GI being null data; and performing a linear convolution operation on the first data sequence having the GI added and a data sequence of time-domain adjacent symbols by using filter time-domain data to obtain the second data sequence.

In a second aspect of the present disclosure, there is provided a data transmission method. As shown in FIG. 9, the data transmission method includes: operation S210, dividing data to be transmitted into N initial groups, with the N initial groups including an edge initial group and a plurality of non-edge initial groups, data volumes of the plurality of non-edge initial groups being the same, and the data volume of each of the plurality of non-edge initial groups being greater than a data volume of the edge initial group; operation S220, respectively performing IFFT on the data corresponding to the N initial groups to obtain N groups of data sequences; operation S230, respectively performing IFFT on the N groups of data sequences to obtain time domain data sequences; and operation S240, transmitting the time domain data sequences.

In the data transmission method provided in the second aspect of the present disclosure, the data volume of the edge initial group is less than the data volume of the non-edge initial group, so that any data to be transmitted can be divided into N groups, and data continuity during transmission can be ensured.

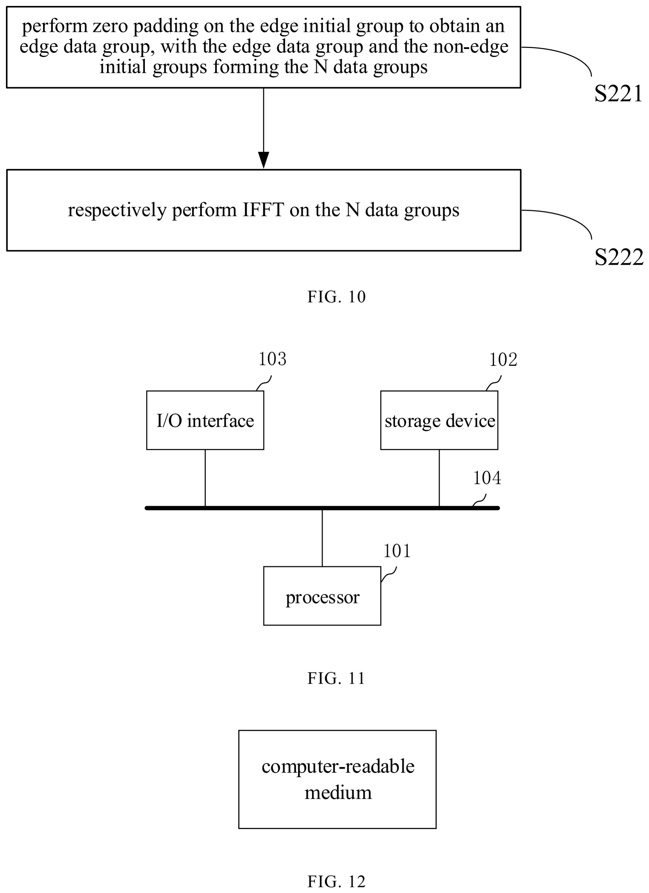

The "data corresponding to the initial groups" is not particularly limited in the present disclosure. For example, the data corresponding to the initial groups may be the data in the initial groups. For example, the data corresponding to the initial groups may be data supplemented with reference data or data subjected to zero padding. In an alternative implementation, as shown in FIG. 10, respectively performing IFFT on the data corresponding to the N initial groups to obtain the N groups of data sequences may include: operation S221, performing zero padding on the edge initial group to obtain an edge data group, with the edge data group and the non-edge initial groups forming the N data groups; and operation S222, respectively performing IFFT on the N data groups.

In the above implementation, the "data corresponding to the initial groups" includes two types of data: the first type of data is the data corresponding to the edge initial group, i.e., the data subjected to zero padding; and the second type of data is the data corresponding to the non-edge initial groups, i.e., the data in the non-edge initial groups.

By performing zero padding on the data in less data volume in the edge initial group, the plurality of data groups each having the same data volume of data can be obtained, and out-of-band leakage can be reduced.

In some implementations, the edge initial group includes the first a initial groups in the N initial groups and/or the last b initial groups in the N initial groups, with a and b being positive integers, 1 ≤ a<N/2, and 1 ≤ b<N/2.

In an alternative implementation, a=1 and b=1, that is, a first initial group is the edge initial group and/or an N^{th} initial group is the edge initial group.

In an alternative implementation, the data volume of each non-edge initial group is an integer power of 2.

In an alternative implementation, at the operation of respectively performing IFFT on the data corresponding to the N initial groups, the number of points for performing IFFT on the data corresponding to the N initial groups is the same.

In an alternative implementation, at the operation of respectively performing IFFT on the data corresponding to the N initial groups, the IFFT is 2-fold oversampling IFFT.

In some implementations, the number of points for performing IFFT on the data corresponding to each initial group is an integer power of 2.

In a third aspect of the present disclosure, there is provided an electronic device, and as shown in FIG. 11, the electronic device includes: at least one processor 101; and a storage device 102 having stored thereon at least one program which, when executed by the at least one processor 101, causes the at least one processor 101 to implement the data transmission method provided in the first aspect or the second aspect of the present disclosure.

In some implementations, the electronic device may further include at least one Input/output (I/O) interface 103 connected between the processor and the storage device and configured to enable information interaction between the processor and the storage device.

The processor 101 is a device having a data processing capability, and includes, but is not limited to, a Central Processing Unit (CPU); the storage device 102 is a device having a data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and the I/O interface (read/write interface) 103 is connected between the processor 101 and the storage device 102, is capable of enabling the information interaction between the processor 101 and the storage device 102, and includes, but is not limited to, a data bus (Bus).

In some implementations, the processor 101, the storage device 102, and the I/O interface 103 are connected to each other through a bus 104, and then are connected to other components of a computing device.

In a fourth aspect of the present disclosure, as shown in FIG. 12, there is provided a computer-readable medium having stored thereon a computer program which, when executed by a processor, causes the processor to implement the data transmission method provided in the first aspect or the second aspect of the present disclosure.

### Example 1

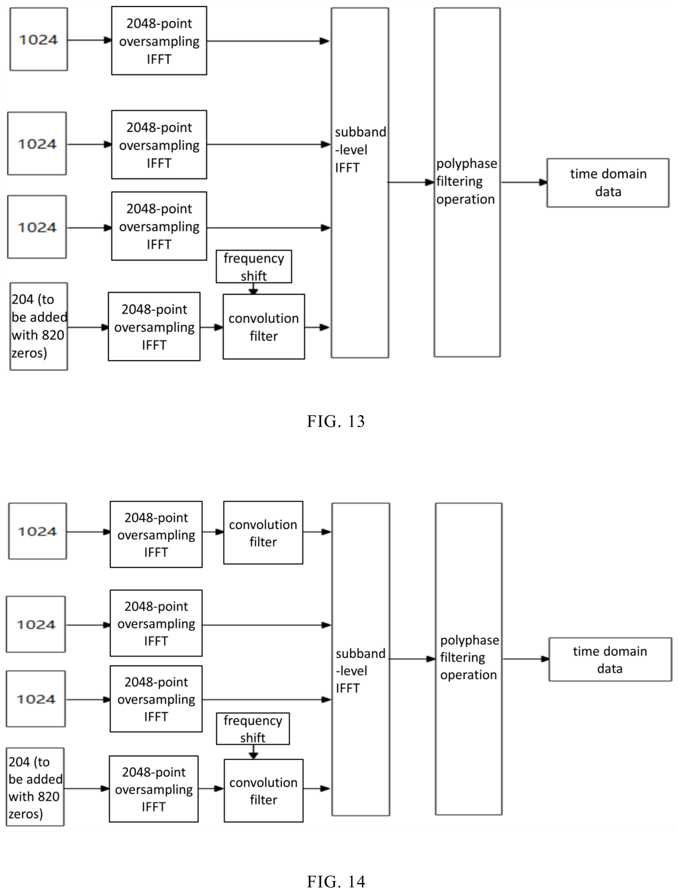

As shown in FIG. 13, the data transmission method in the present example includes the following operations.

The data to be transmitted is first divided into four initial groups, each of the first three initial groups includes 1024 pieces of data, and the fourth initial group includes 204 pieces of data (that is, the fourth initial group is an edge initial group), and a total of 273 Resource Blocks (RBs) are provided. The subcarrier spacing of each initial group is 30 kHz, and a total bandwidth is 100 MHz.

Then, 820 zero subcarriers are added to an outer side of the fourth initial group to obtain a fourth data group, and the first three initial groups are taken as the first three data groups. Thus, four data groups are obtained in total.

Then, 2048-point oversampling IFFT is performed on each data group, thereby obtaining four groups of first data sequences.

In order to reduce out-of-band leakage, a convolution filter operation is performed on the first data sequence of the fourth group, and a frequency shift operation is performed on a convolution filter for the first data sequence of the fourth group, so as to align a center point of the filter with a center point of the 204 pieces of data of the fourth subband, thereby obtaining a second data sequence corresponding to the first data sequence of the fourth group.

Subsequently, subband-level IFFT and a polyphase filtering operation are performed on the first data sequences of the first three groups and the second data sequence of the fourth group, thereby obtaining a group of time domain data.

### Example 2

As shown in FIG. 14, the data transmission method in the present example includes the following operations.

The data to be transmitted is first divided into four initial groups, each of the first three initial groups includes 1024 pieces of data, and the fourth initial group includes 204 pieces of data (that is, the fourth initial group is an edge initial group), and a total of 273 RBs are provided. The subcarrier spacing of each initial group is 30 kHz.

Then, 820 zero subcarriers are added to an outer side of the fourth initial group to obtain a fourth data group, and the first three initial groups are taken as the first three data groups. Thus, four data groups are obtained in total.

Then, 2048-point oversampling IFFT is performed on each data group, thereby obtaining four groups of first data sequences.

In order to reduce out-of-band leakage, a convolution filter operation is performed on the first data sequence of the first group and the first data sequence of the fourth group, and a frequency shift operation is performed on a convolution filter for the first data sequence of the fourth group, so as to align a center point of the filter with a center point of the 204 pieces of data of the fourth subband, thereby obtaining a second data sequence corresponding to the first data sequence of the first group and a second data sequence corresponding to the first data sequence of the fourth group.

Subsequently, subband-level IFFT and a polyphase filtering operation are performed on the second data sequence of the first group, the first data sequence of the second group, the first data sequence of the third group, and the second data sequence of the fourth group, thereby obtaining a group of time domain data.

### Example 3

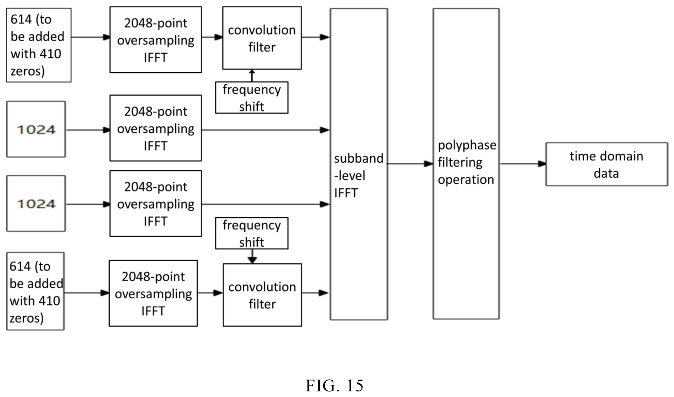

As shown in FIG. 15, the data transmission method in the present example includes the following operations.

The data to be transmitted is first divided into four initial groups, a first initial group (an edge initial group) includes 614 pieces of data, each of a second initial group and a third initial group includes 1024 pieces of data, a fourth initial group (an edge initial group) includes 614 pieces of data, and a total of 273 RBs are provided. The subcarrier spacing of each initial group is 30 kHz.

Then, 410 zero subcarriers are added to an outer side of the first initial group to obtain a first data group, 410 zero subcarriers are added to an outer side of the fourth initial group to obtain a fourth data group, the second initial group is taken as a second data group, and the third initial group is taken as a third data group. Thus, four data groups are obtained in total.

Then, 2048-point oversampling IFFT is performed on each data group, thereby obtaining four groups of first data sequences.

In order to reduce out-of-band leakage, a convolution filter operation is performed on the first data sequence of the first group and the first data sequence of the fourth group, a frequency shift operation is performed on a convolution filter for the first data sequence of the first group to align a center point of the filter with a center point of the 614 pieces of data of the first subband, and a frequency shift operation is performed on a convolution filter for the first data sequence of the fourth group to align a center point of the filter with a center point of the 614 pieces of data of the fourth subband, thereby obtaining a second data sequence corresponding to the first data sequence of the first group and a second data sequence corresponding to the first data sequence of the fourth group.

Subsequently, subband-level IFFT and a polyphase filtering operation are performed on the second data sequence of the first group, the first data sequence of the second group, the first data sequence of the third group, and the second data sequence of the fourth group, thereby obtaining a group of time domain data.

### Example 4

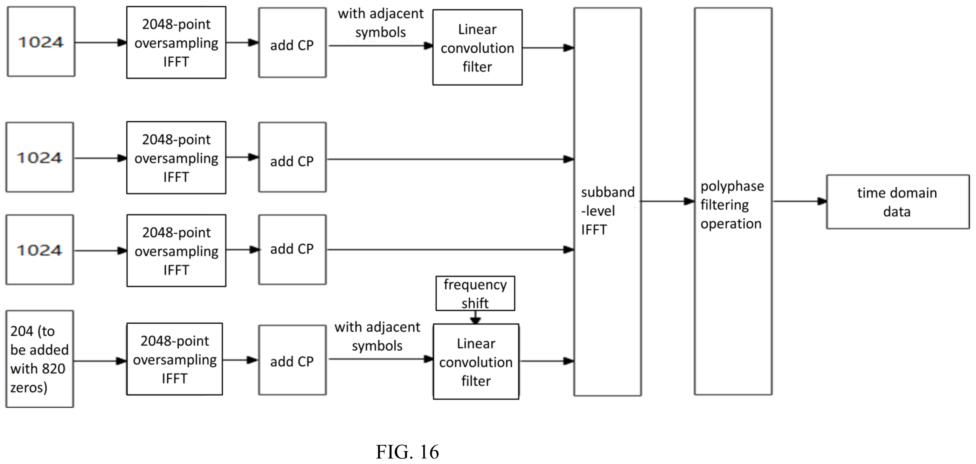

As shown in FIG. 16, the data transmission method in the present example includes the following operations.

The data to be transmitted is first divided into four initial groups, each of the first three initial groups includes 1024 pieces of data, and the fourth initial group (an edge initial group) includes 204 pieces of data, and a total of 273 RBs are provided. The subcarrier spacing of each initial group is 30 kHz.

Then, 820 zero subcarriers are added to an outer side of the fourth initial group to obtain a fourth data group, and the first three initial groups are taken as the first three data groups. Thus, four data groups are obtained in total.

Then, 2048-point oversampling IFFT is performed on each data group, thereby obtaining four groups of first data sequences.

Then, CPs are added to the first data sequences of the four groups obtained after the 2048-point oversampling IFFT, with lengths of the CPs being as follows: long CP being of 80 points, and short CP being of 72 points.

In order to reduce out-of-band leakage, a convolution filter operation is performed on the first data sequence of the first group having the CP added and the first data sequence of the fourth group having the CP added to obtain a second data sequence corresponding to the first data sequence of the first group and a second data sequence corresponding to the first data sequence of the fourth group respectively, and the convolution filter operation specifically includes: a linear convolution with a filter, together with adjacent symbols. A frequency shift operation is performed on the filter for the convolution on the first data sequence of the fourth group, so as to align a center point of the filter with a center point of the 204 pieces of data of the fourth subband.

Subsequently, subband-level IFFT and a polyphase filtering operation are performed on the second data sequence of the first group, the first data sequence of the second group having the CP added, the first data sequence of the third group having the CP added, and the second data sequence of the fourth group, thereby obtaining a group of time domain data.

### Example 5

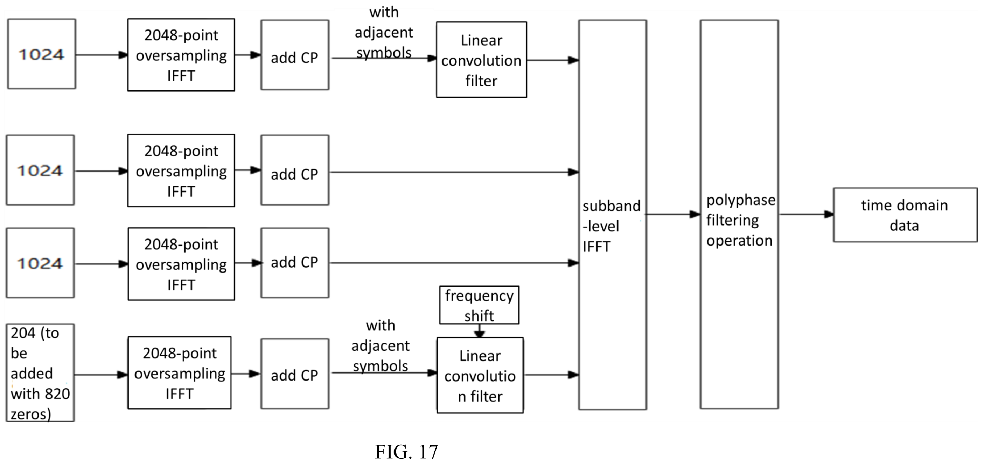

As shown in FIG. 17, the data transmission method in the present example includes the following operations.

The data to be transmitted is first divided into four initial groups, each of the first three initial groups includes 1024 pieces of data, and the fourth initial group includes 204 pieces of data, and a total of 273 RBs are provided. The subcarrier spacing of each initial group is 30 kHz.

Then, 820 zero subcarriers are added to an outer side of the fourth initial group to obtain a fourth data group, and the first three initial groups are taken as the first three data groups. Thus, four data groups are obtained in total.

Then, 2048-point oversampling IFFT is performed on each data group, thereby obtaining four groups of first data sequences.

Then, GIs are added to the first data sequences of the four groups obtained after the 2048-point oversampling IFFT, with the GIs being null data, and lengths of the GIs being as follows: long GI being of 80 points, and short GI being of 72 points.

In order to reduce out-of-band leakage, a convolution filter operation is performed on the first data sequence of the first group having the GI added and the first data sequence of the fourth group having the GI added, and the convolution filter operation specifically includes: a linear convolution with a filter, together with adjacent symbols, for obtaining a second data sequence corresponding to the first data sequence of the first group and a second data sequence corresponding to the first data sequence of the fourth group. A frequency shift operation is performed on the filter for the convolution on the first data sequence of the fourth group, so as to align a center point of the filter with a center point of the 204 pieces of data of the fourth subband.

Subsequently, subband-level IFFT and a polyphase filtering operation are performed on the second data sequence of the first group, the first data sequence of the second group, the first data sequence of the third group, and the second data sequence of the fourth group, thereby obtaining a group of time domain data.

### Example 6

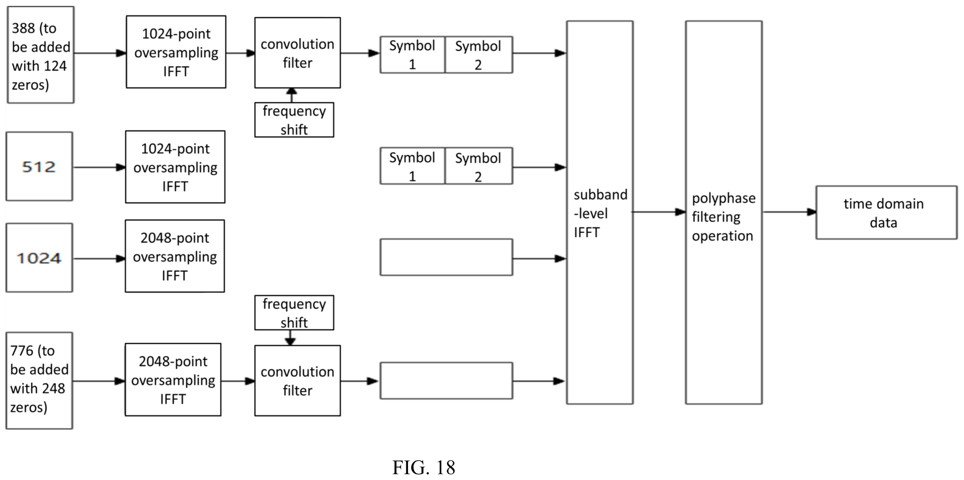

As shown in FIG. 18, the data transmission method in the present example includes the following operations.

The data to be transmitted is first divided into four initial groups, a first initial group includes 388 pieces of data, a second initial group includes 512 pieces of data, a third initial group includes 1024 pieces of data, and a fourth initial group includes 776 pieces of data. The subcarrier spacing of each of the first two initial groups is 30 kHz, and the subcarrier spacing of each of the last two initial groups is 15 kHz.

Then, 124 zero subcarriers are added to an outer side of the first initial group to obtain a first data group, and 248 zero subcarriers are added to an outer side of the fourth initial group to obtain a fourth data group; and the third initial group is taken as a third data group, and the second initial group is taken as a second data group. Thus, four data groups are obtained in total.

Then, 1024-point oversampling IFFT is respectively performed on the first data group and the second data group to obtain a first group of first data sequence and a second group of first data sequence, 2048-point oversampling IFFT is respectively performed on the third data group and the fourth data group to obtain a third group of first data sequence and a fourth group of first data sequence, and CPs are respectively added to the first data sequence of the first group, the first data sequence of the second group, the first data sequence of the third group, and the first data sequence of the fourth group.

In order to reduce out-of-band leakage, a convolution filter operation is performed on the first data sequence of the first group having the CP added and the first data sequence of the fourth group having the CP added to obtain a second data sequence of a first group corresponding to the first data sequence of the first group and a second data sequence of a fourth group corresponding to the first data sequence of the fourth group respectively, and a frequency shift operation is respectively performed on a convolution filter for the first data sequence of the first group and a convolution filter for the first data sequence of the fourth group, so as to align a center point of the filter with a center point of the data of the first subband and align a center point of the filter with a center point of the data of the fourth subband.

For the second data sequence of the first group, the data of two adjacent symbols (represented by symbol 1 and symbol 2 in FIG. 18) are connected in series to form data having the same length as the first data sequence of the third group and the second data sequence of the fourth group.

For the first data sequence of the second group, the data of two adjacent symbols (represented by symbol 1 and symbol 2 in FIG. 18) are connected in series to form data having the same length as the first data sequence of the third group and the second data sequence of the fourth group.

Then, subband-level IFFT and a polyphase filtering operation are performed on the second data sequence of the first group subjected to addition of symbols, the first data sequence of the second group subjected to addition of symbols, the first data sequence of the third group, and the second data sequence of the fourth group, thereby obtaining a group of time domain data.

### Example 7

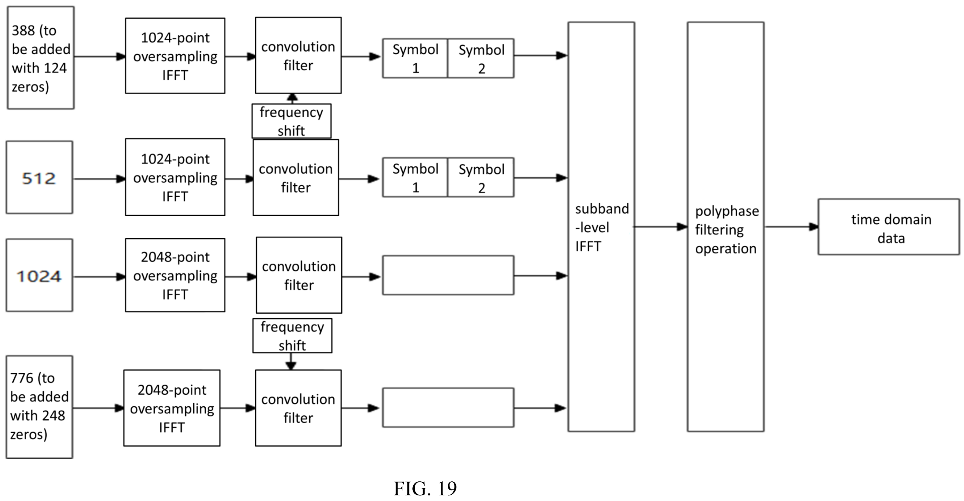

As shown in FIG. 19, the data transmission method in the present example includes the following operations.

The data to be transmitted is first divided into four initial groups, a first initial group includes 388 pieces of data, a second initial group includes 512 pieces of data, a third initial group includes 1024 pieces of data, and a fourth initial group includes 776 pieces of data. The subcarrier spacing of each of the first two initial groups is 30 kHz, and the subcarrier spacing of each of the last two initial groups is 15 kHz.

Then, 124 zero subcarriers are added to an outer side of the first initial group to obtain a first data group, and 248 zero subcarriers are added to an outer side of the fourth initial group to obtain a fourth data group. The third initial group is taken as a third data group, and the second initial group is taken as a second data group. Thus, four data groups are obtained in total.

Then, 1024-point oversampling IFFT is respectively performed on the first data group and the second data group to obtain a first group of first data sequence and a second group of first data sequence, 2048-point oversampling IFFT is respectively performed on the third data group and the fourth data group to obtain a third group of first data sequence and a fourth group of first data sequence, and CPs are respectively added to the first data sequence of the first group, the first data sequence of the second group, the first data sequence of the third group, and the first data sequence of the fourth group.

In order to reduce out-of-band leakage, a convolution filter operation is performed on the four groups of first data sequences having the CPs added to obtain four groups of second data sequences, and a frequency shift operation is performed on a convolution filter for the first data sequence of the first group and a convolution filter for the first data sequence of the fourth group, so as to align a center point of the filter with a center point of the data of the first subband and align a center point of the filter with a center point of the data of the fourth subband.

For the second data sequence of the first group, the data of two adjacent symbols are connected in series to form data having the same length as the second data sequence of the third group and the second data sequence of the fourth group.

For the second data sequence of the second group, the data of two adjacent symbols are connected in series to form data having the same length as the second data sequence of the third group and the second data sequence of the fourth group.

Then, subband-level IFFT and a polyphase filtering operation are performed on the second data sequence of the first group subjected to addition of symbols, the second data sequence of the second group subjected to addition of symbols, the second data sequence of the third group, and the second data sequence of the fourth group, thereby obtaining a group of time domain data.

### Example 8

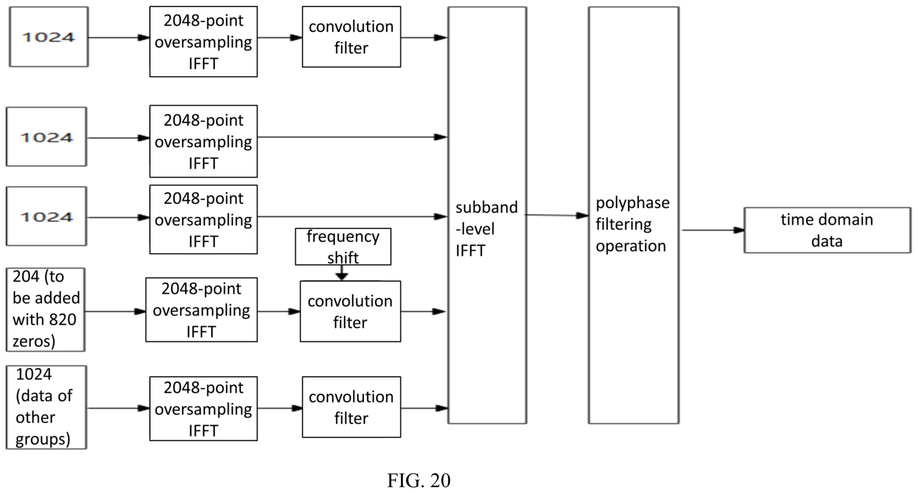

As shown in FIG. 20, the data transmission method in the present example includes the following operations.

The data to be transmitted is first divided into four initial groups, each of a first initial group, a second initial group, and a third initial group includes 1024 pieces of data, a fourth initial group includes 204 pieces of data, and a total of 273 RBs are provided. The subcarrier spacing of each initial group is 30 kHz.

Then, 820 zero subcarriers are added to an outer side of the fourth initial group to obtain a fourth data group. The first initial group is taken as a first data group, the second initial group is taken as a second data group, and the third initial group is taken as a third data group. Thus, four data groups are obtained in total.

Then, 2048-point oversampling IFFT is performed on each data group, thereby obtaining four groups of first data sequences.

In order to reduce out-of-band leakage, a convolution filter operation is performed on the first data sequence of the first group and the first data sequence of the fourth group to obtain a second data sequence corresponding to the first data sequence of the first group and a second data sequence corresponding to the first data sequence of the fourth group respectively, and a frequency shift operation is performed on a convolution filter for the first data sequence of the fourth group, so as to align a center point of the filter with a center point of the 204 pieces of data of the fourth subband.

Subsequently, subband-level IFFT and a polyphase filtering operation are performed on the second data sequence of the first group, the first data sequence of the second group, the first data sequence of the third group, the second data sequence of the fourth group, and data sequences of other groups, thereby obtaining a group of time domain data. The data of the other groups may be data subjected to IFFT or data not subjected to IFFT, and the data of the other groups may be subjected to a filtering operation by a filter or not. The data of the other groups in the present example is the data subjected to the filtering operation after IFFT.

### Example 9

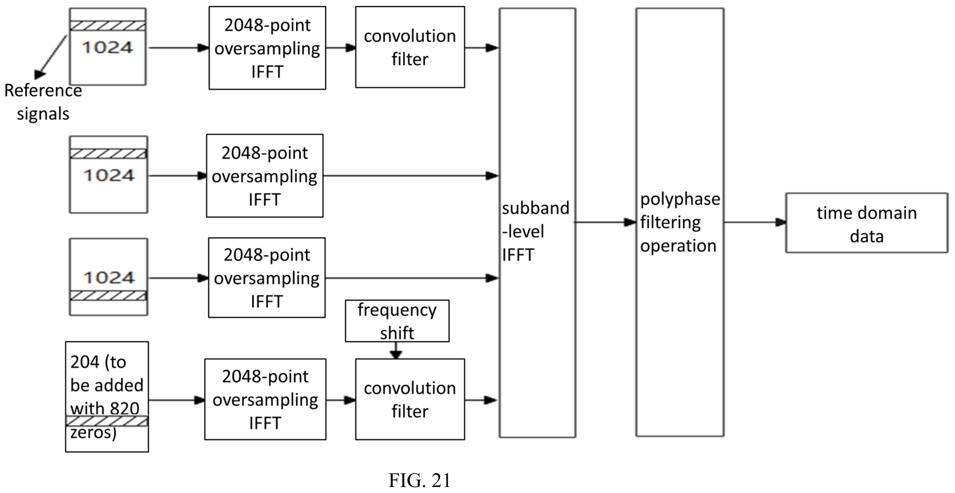

As shown in FIG. 21, the data transmission method in the present example includes the following operations.

The data to be transmitted is first divided into four initial groups, each of a first initial group, a second initial group, and a third initial group includes 1024 pieces of data, a fourth initial group includes 204 pieces of data, a total of 273 RBs are provided, and part of the data in each initial group includes reference signals. The subcarrier spacing of each initial group is 30 kHz.

Then, 820 zero subcarriers are added to an outer side of the fourth initial group to obtain a fourth data group. The first three initial groups are taken as the first three data groups. Thus, four data groups are obtained in total.

Then, 2048-point oversampling IFFT is performed on each data group, thereby obtaining four groups of first data sequences.

In order to reduce out-of-band leakage, a convolution filter operation is performed on the first data sequence of the first group and the first data sequence of the fourth group to obtain a second data sequence corresponding to the first data sequence of the first group and a second data sequence corresponding to the first data sequence of the fourth group respectively, and a frequency shift operation is performed on a convolution filter for the first data sequence of the fourth group, so as to align a center point of the filter with a center point of the 204 pieces of data of the fourth subband.

Subsequently, subband-level IFFT and a polyphase filtering operation are performed on the second data sequence of the first group, the first data sequence of the second group, the first data sequence of the third group, and the second data sequence of the fourth group, thereby obtaining a group of time domain data.

### Example 10

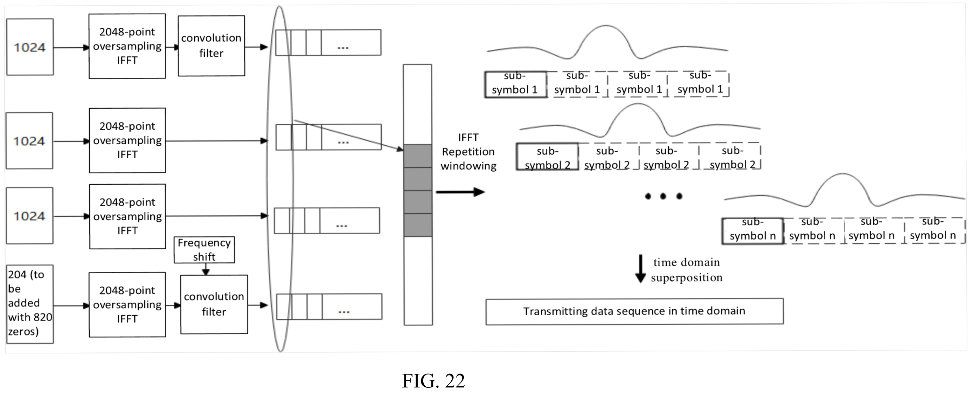

As shown in FIG. 22, the data transmission method in the present example includes the following operations.

The data to be transmitted is first divided into four initial groups, each of the first three initial groups includes 1024 pieces of data, a fourth initial group includes 204 pieces of data, and a total of 273 RBs are provided. The subcarrier spacing of each initial group is 30 kHz.

Then, 820 zero subcarriers are added to an outer side of the fourth initial group to obtain a fourth data group. The first three initial groups are taken as the first three data groups. Thus, four data groups are obtained in total.

Then, 2048-point oversampling IFFT is performed on each data group, thereby obtaining four groups of first data sequences.

In order to reduce out-of-band leakage, a convolution filter operation is performed on the first data sequence of the first group and the first data sequence of the fourth group to obtain a second data sequence corresponding to the first data sequence of the first group and a second data sequence corresponding to the first data sequence of the fourth group respectively, and a frequency shift operation is performed on a convolution filter for the first data sequence of the fourth group, so as to align a center point of the filter with a center point of the 204 pieces of data of the fourth subband.

Then, IFFT is performed on the second data sequence of the first group, the first data sequence of the second group, the first data sequence of the third group, and the second data sequence of the fourth group, and a process of the IFFT is as follows: arranging the data of the four groups (i.e., the second data sequence of the first group, the first data sequence of the second group, the first data sequence of the third group, and the second data sequence of the fourth group) into four rows respectively, extracting four pieces of data column by column, performing 8-point oversampling IFFT on each of the extracted four pieces of data to obtain a subsymbol, repeatedly expanding the subsymbol by 4 times (four subsymbols 1, four subsymbols 2, ... four subsymbols n are shown in FIG. 22), adding a window function, and finally connecting 2048 subsymbols in series in time domain to form a group of time domain data sequence, with an interval of the connecting in series being 4 points, i.e., half the length of one subsymbol.

Subsequently, the group of time domain data sequence is transmitted on the time-frequency resources.

It should be understood by those of ordinary skill in the art that all or some of the operations in the method, the functional modules/units in the systems and the devices disclosed above may be implemented as software, firmware, hardware, or suitable combinations thereof. If implemented as hardware, the division between the functional modules/units stated above does not necessarily correspond to the division of physical components; for example, one physical component may have a plurality of functions, or one function or operation may be performed through cooperation of several physical components. Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable medium used in any method or technology for storing information (such as computer-readable instructions, data structures, program modules or other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication medium generally include computer-readable instructions, data structures, program modules, or other data in modulated data signals such as carriers or other transmission mechanisms, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that the features, characteristics and/or elements described in connection with a particular embodiment can be used alone or in combination with the features, characteristics and/or elements described in connection with other embodiments. Therefore, it should be understood by those of ordinary skill in the art that various changes in forms and details can be made without departing from the scope of the present disclosure of the appended claims.

## Claims

1. A data transmission method, comprising:
grouping data to be transmitted into N data groups, with N being a positive integer greater than 2;
respectively performing Inverse Fast Fourier Transform on the data of each data group to obtain N groups of first data sequences;
performing a filtering operation on the first data sequence of an edge group in the N groups of first data sequences to obtain a second data sequence;
performing Inverse Fast Fourier Transform on the second data sequence and the data corresponding to the first data sequences of non-edge groups in the N groups of first data sequences to obtain a time domain data sequence; and
transmitting the time domain data sequence.

2. The data transmission method of claim 1, wherein the first data sequence of the edge group comprises the first data sequences of first a groups in the N groups of first data sequences and/or the first data sequences of last b groups in the N groups of first data sequences, wherein a and b are positive integers, 1≤a<N/2, and 1 ≤ b<N / 2.

3. The data transmission method of claim 2, wherein the first data sequence of a first group is the first data sequence of the edge group and/or the first data sequence of an N^{th} group is the first data sequence of the edge group.

4. The data transmission method of claim 1, wherein performing the filtering operation on the first data sequence of the edge group in the N groups of first data sequences to obtain the second data sequence comprises:
respectively adding a cyclic prefix to the first data sequence of each edge group; and
performing a linear convolution operation on the first data sequence having the cyclic prefix added and a data sequence of time-domain adjacent symbols by using filter time-domain data to obtain the second data sequence, wherein
the data corresponding to the first data sequences of the non-edge groups comprises data obtained by adding cyclic prefixes to the first data sequences of the non-edge groups.

5. The data transmission method of claim 4, wherein performing the linear convolution operation on the first data sequence having the cyclic prefix added and the data sequence of time-domain adjacent symbols by using the filter time-domain data to obtain the second data sequence comprises:
performing a frequency shift operation on the filter time-domain data to align a center point of a filter with a center point of the first data sequence to be filtered; and
performing the convolution operation on the first data sequence having the cyclic prefix added by using the filter time-domain data subjected to the frequency shift operation.

6. The data transmission method of claim 1, wherein performing the filtering operation on the first data sequence of the edge group in the N groups of first data sequences to obtain the second data sequence comprises:
performing a frequency shift operation on filter time-domain data to align a center point of a filter with a center point of the first data sequence to be filtered; and
performing a convolution operation on the first data sequence to be filtered by using the filter time-domain data subjected to the frequency shift operation.

7. The data transmission method of claim 5 or 6, wherein grouping the data to be transmitted into the N data groups comprises:
dividing the data to be transmitted to obtain N initial groups, with a data volume of each non-edge initial group being an integer power of 2, and a data volume of an edge initial group being not equal to an integer power of 2; and
performing zero padding on the initial group having the data volume not equal to the integer power of 2, thereby obtaining the N data groups, wherein a data volume of each of the N data groups is an integer power of 2.

8. The data transmission method of claim 7, wherein a frequency shift amount of the frequency shift operation is 0 in response to the data volume of the edge initial group in the N initial groups being the integer power of 2.

9. The data transmission method of claim 1, wherein during respectively performing Inverse Fast Fourier Transform on the data of each data group, a number of points of the Inverse Fast Fourier Transform for each data group is less than a total number of pieces of the data to be transmitted.

10. The data transmission method of claim 9, wherein during respectively performing Inverse Fast Fourier Transform on the data of each data group, the number of points of the Inverse Fast Fourier Transform is an integer power of 2.

11. The data transmission method of claim 1, wherein the Inverse Fast Fourier Transform for respectively performing Inverse Fast Fourier Transform on the data of each data group is 2-fold oversampling, and a data starting point for performing Inverse Fast Fourier Transform on each data group is within the data group.

12. The data transmission method of claim 1, wherein data volumes of non-edge initial groups are the same; or
a ratio of the data volumes of the non-edge initial groups is an integer power of 2.

13. The data transmission method of any one of claims 1 to 6 and claims 9 to 12, wherein during performing Inverse Fast Fourier Transform on the second data sequence and the data corresponding to the first data sequences of the non-edge groups, the Inverse Fast Fourier Transform is oversampling Inverse Fast Fourier Transform with a number of points being greater than N.

14. The data transmission method of claim 13, wherein during performing Inverse Fast Fourier Transform on the second data sequence and the data corresponding to the first data sequences of the non-edge groups to obtain the time domain data sequence, the data in the Inverse Fast Fourier Transform further comprises data sequences of other groups.

15. The data transmission method of any one of claims 1 to 6 and claims 9 to 11, wherein performing Inverse Fast Fourier Transform on the second data sequence and the data corresponding to the first data sequences of the non-edge groups to obtain the time domain data sequence comprises:
performing Inverse Fast Fourier Transform on the second data sequence and the data corresponding to the first data sequences of the non-edge groups to obtain a plurality of groups of third data sequences;
serially concatenating the plurality of groups of third data sequences to obtain serially concatenated data sequences; and
performing a filtering operation on the serially concatenated data sequences to obtain the time domain data sequence.

16. The data transmission method of claim 15, wherein during performing Inverse Fast Fourier Transform on the second data sequence and the data corresponding to the first data sequences of the non-edge groups, the Inverse Fast Fourier Transform is oversampling Inverse Fast Fourier Transform with a number of points being greater than N; and
performing Inverse Fast Fourier Transform on the second data sequence and the data corresponding to the first data sequences of the non-edge groups to obtain the plurality of groups of third data sequences comprises:
respectively performing data extraction on the second data sequence of each group and the first data sequence of each non-edge group to obtain a plurality of groups of third initial sequences, with each group of third initial sequence comprising N pieces of data from the second data sequence of each group and the first data sequence of each non-edge group; and
respectively performing Inverse Fast Fourier Transform on the plurality of groups of third initial sequences to obtain the plurality of groups of third data sequences.

17. The data transmission method of claim 15, wherein during performing the filtering operation on the serially concatenated data sequences, the filtering operation comprises a polyphase filtering operation.

18. The data transmission method of claim 16, wherein performing the filtering operation on the serially concatenated data sequences to obtain the time domain data sequence comprises:
respectively performing a repetition and windowing operation on the plurality of groups of third data sequences; and
performing offset overlap-add on the plurality of groups of third data sequences subjected to the repetition and windowing operation to obtain the time domain data sequence.

19. The data transmission method of claim 16, wherein performing the filtering operation on the serially concatenated data sequences to obtain the time domain data sequence comprises:
performing downsampling on the plurality of groups of third data sequences to obtain a plurality of parallel data groups;
respectively performing a filtering operation on the plurality of parallel data groups with a filter; and
performing upsampling and an adding operation on a plurality of data groups obtained after the filtering operation to obtain the time domain data sequence.

20. The data transmission method of any one of claims 1 to 6 and claims 9 to 11, wherein the N data groups are transmitted in N frequency domain resource blocks respectively, a number of subcarriers in each of the N frequency domain resource blocks is k(n), the N frequency domain resource blocks are consecutive in frequency domain, and k(n) of each non-edge frequency domain resource block is an integer power of 2, wherein n=1, 2, ..., N.

21. The data transmission method of claim 20, wherein spectral spacings of adjacent non-edge frequency domain resource blocks are the same.

22. The data transmission method of claim 20, wherein spectral bandwidths of non-edge frequency domain resource blocks are the same.

23. The data transmission method of claim 20, wherein the number of the subcarriers in each non-edge frequency domain resource block is the same; or
a ratio of numbers of the subcarriers in the non-edge frequency domain resource blocks is an integer power of 2.

24. The data transmission method of claim 20, wherein subcarrier spacings of the N frequency domain resource blocks are the same; or
the subcarrier spacings of the N frequency domain resource blocks are not the same, and a ratio of the subcarrier spacings of different frequency domain resource blocks is an integer power of 2.

25. The data transmission method of claim 20, wherein the subcarriers in an edge frequency domain resource block comprise initial subcarriers and zero subcarriers, a number of the initial subcarriers is less than a number of the subcarriers in each of other frequency domain resource blocks having the same subcarrier spacings as the edge frequency domain resource block, and a sum of the number of the initial subcarriers and a number of the zero subcarriers in the edge frequency domain resource block is the same as the number of the subcarriers in each of the other frequency domain resource blocks having the same subcarrier spacings as the edge frequency domain resource block.

26. The data transmission method of claim 25, wherein the zero subcarriers in the edge frequency domain resource block are outside the N frequency domain resource blocks.

27. The data transmission method of claim 25, wherein a spectral bandwidth of the edge frequency domain resource block with no zero subcarriers padded is less than a spectral bandwidth of each non-edge frequency domain resource block.

28. The data transmission method of claim 20, wherein during respectively performing Inverse Fast Fourier Transform on the data of each data group, Inverse Fast Fourier Transform is respectively performed on the data to be transmitted on the k(n) subcarriers in each frequency domain resource block, and a zero-frequency position of the Inverse Fast Fourier Transform meets any one of following conditions:
the zero-frequency position of the Inverse Fast Fourier Transform corresponding to each frequency domain resource block is different in frequency domain;
the zero-frequency position of the Inverse Fast Fourier Transform corresponding to each frequency domain resource block is within a frequency range of the k(n) subcarriers in each frequency domain resource block; and
the zero-frequency position of the Inverse Fast Fourier Transform corresponding to each frequency domain resource block is on one of the k(n) subcarriers in each frequency domain resource block.

29. The data transmission method of claim 20, wherein performing the filtering operation on the first data sequence of the edge group in the N groups of first data sequences to obtain the second data sequence comprises:
respectively adding a guard interval to the first data sequence of each edge group, with the guard interval being null data; and
performing a linear convolution operation on the first data sequence having the guard interval added and a data sequence of time-domain adjacent symbols by using filter time-domain data to obtain the second data sequence.

30. A data transmission method, comprising:
dividing data to be transmitted into N initial groups, wherein the N initial groups comprise an edge initial group and a plurality of non-edge initial groups, data volumes of the plurality of non-edge initial groups are the same, and the data volume of each of the plurality of non-edge initial groups is greater than a data volume of the edge initial group;
respectively performing Inverse Fast Fourier Transform on the data corresponding to the N initial groups to obtain N groups of data sequences;
respectively performing Inverse Fast Fourier Transform on the N groups of data sequences to obtain time domain data sequences; and
transmitting the time domain data sequences.

31. The data transmission method of claim 30, wherein respectively performing Inverse Fast Fourier Transform on the data corresponding to the N initial groups comprises:
performing zero padding on the edge initial group to obtain an edge data group, with the edge data group and the non-edge initial groups forming the N data groups; and
respectively performing Inverse Fast Fourier Transform on the N data groups.

32. The data transmission method of claim 30, wherein the edge initial group comprises first a initial groups in the N initial groups and/or last b initial groups in the N initial groups, wherein a and b are positive integers, 1 ≤ a<N / 2, and 1 ≤ b<N / 2.

33. The data transmission method of claim 32, wherein a first initial group is the edge initial group and/or an N^{th} initial group is the edge initial group.

34. The data transmission method of claim 30, wherein the data volume of each of the non-edge initial groups is an integer power of 2.

35. The data transmission method of any one of claims 30 to 34, wherein during respectively performing Inverse Fast Fourier Transform on the data corresponding to the N initial groups, a number of points for performing Inverse Fast Fourier Transform on the data corresponding to the N initial groups is the same.

36. The data transmission method of claim 35, wherein during respectively performing Inverse Fast Fourier Transform on the data corresponding to the N initial groups, the Inverse Fast Fourier Transform is 2-fold oversampling Inverse Fast Fourier Transform.

37. The data transmission method of claim 36, wherein the number of points for performing Inverse Fast Fourier Transform on the data corresponding to each initial group is an integer power of 2.

38. An electronic device, comprising:
at least one processor; and
a storage device having stored thereon at least one program which, when executed by the at least one processor, causes the at least one processor to implement the data transmission method of any one of claims 1 to 37.

39. A computer-readable medium having stored thereon a computer program which, when executed by a processor, causes the processor to implement the data transmission method of any one of claims 1 to 37.
